# EUROPEAN PATENT SPECIFICATION

(11) **EP 3 002 472 B1**
(45) Date of publication and mention of the grant of the patent: **04.12.2019**
(21) Application number: 15187930.1
(22) Date of filing: 01.10.2015
(51) Int. Cl.: F16C 35/077, F16C 23/00

(54) **A SEGMENTED OUTER RING FOR A BEARING FOR MITIGATING TORQUE DEGRADATION**
SEGMENTIERTER AUSSENRING FÜR EIN LAGER ZUR ABSCHWÄCHUNG DES DREHMOMENTABBAUS
ANNEAU EXTERNE SEGMENTÉ DESTINÉ À UN PALIER POUR ATTÉNUER LA DÉGRADATION DE COUPLE

(30) Priority: 01.10.2014 US 201462058439 P
(43) Date of publication of application: 06.04.2016
(73) Proprietor: Schaublin SA, 2800 Delémont (CH)
(72) Inventor: CHARMILLOT, Philippe, 2832 Rebeuvelier (CH); DUENNER, Matthias, 2822 Courroux (CH)
(74) Representative: Bjerkéns Patentbyrå KB (Stockholm)

(56) References cited:
- WO-A1-2004/111478
- WO-A1-2006/014199
- FR-A- 1 007 872
- US-A- 4 240 677

## Description

### FIELD OF THE INVENTION

The present invention relates generally to a bearing and housing assembly comprising a housing and an outer ring, and more specifically to a segmented outer ring for a bearing that includes an outer sleeve and an inner sleeve.

### BACKGROUND OF THE INVENTION

Bearings can be used to reduce friction between moving parts of a mechanical assembly. Typically, bearings include an inner member disposed at least partially in an outer ring. The bearing can be secured in a bore of a housing portion of the mechanical assembly. The outer ring can be press fit into the bore of the housing. However, simply press fitting the outer ring of the bearing into the bore of a housing, for certain bearings, can cause an undesirable change in torque on the bearing. This undesirable torque results in decreased functionality of the bearing even though the bearing has no external load. An outer ring of a bearing that, upon being press fit into the bore of the housing portion of the mechanical assembly, remains within a predetermined range of torque throughout and after being press fit into the bore, has long been sought in the art. US 4 240 677 discloses a bearing mounting device and bearing for economical replacement of worn and damaged bearings in a machine housing. The bearing mounting device comprises a radially expandable sleeve having radially movable segments along the periphery thereof and a tapered, threaded bore. A bearing with a tapered, threaded outer diameter complementary to the threaded bore of the sleeve threadingly engages the bore of the sleeve, and tightening of the bearing into the bore expands the segments of the sleeve against the housing. With the tapered outer diameter of the bearing, when tightened securely in the bore the bearing and the sleeve are securely fixed in the housing. A spanner wrench is disclosed for rotating the outer race of the bearing into engagement with the sleeve, and a second spanner wrench is disclosed for preventing rotation of the sleeve during insertion of the bearing.

### SUMMARY OF THE INVENTION

There is disclosed herein a bearing and a housing assembly comprising an outer ring according to claim 1. The outer ring includes an outer sleeve that defines a first exterior surface and a first interior area. The first interior area is defined by a first inner surface extending along the outer sleeve. The first inner surface has a first fastener mechanism formed therein. The outer ring further includes an inner sleeve that defines both a second exterior surface and a second interior area. The second interior area is defined by a second inner surface that extends along the inner sleeve. The second exterior surface has a second fastener mechanism formed therein. The inner sleeve is removably disposed in the first interior area via selective engagement of the first fastener mechanism with the second fastener mechanism. The outer sleeve surrounds the inner sleeve. The outer sleeve extends axially from a first end to a second end of the outer sleeve. The inner sleeve extends axially from the first end to the second end of the outer sleeve.

In one embodiment, the predetermined range of operating torque of the bearing assembly is dependent upon bearing size. The operating torque being of a finite quantity before installation and being of said finite quantity after installation.

The first fastener mechanism includes a female threaded area and the second fastener mechanism includes a male threaded area which is selectively threaded engaged with the female threaded area.

The first exterior surface is cylindrical and configured to be press fit into a bore of a housing.

In one embodiment, the outer sleeve defines one or more locking mechanisms for preventing rotation of the outer sleeve relative to the inner sleeve when the inner sleeve is disposed in the in the first interior area.

In one embodiment, one or more of the locking mechanisms includes one or more staking groove formed in at least one axial end of the outer sleeve, the staking grooves define at least one axially extending leg.

In one embodiment, the inner sleeve defines at least one chamfer for receiving one of the at least one axially extending legs.

In one embodiment, the outer sleeve is manufactured from a first metallic material and the inner sleeve is manufactured from a second metallic material different than the first metallic material. The first metallic material and the second metallic material are selected to inhibit galvanic corrosion.

In one embodiment, the outer sleeve and the inner sleeve are metallic materials, non-metallic materials, composite materials, coated materials, uncoated materials, plastics, materials having treated surfaces materials having untreated surfaces and/or materials having other treatments.

In one embodiment, the bearing is a spherical bearing, a journal bearing or a roller bearing.

In one embodiment, the inner member is one of an inner race, a ball, a shaft, a pin and another sliding or rolling member.

In one embodiment, the housing has a bore that extends therethrough. The bore is defined by a fourth inner surface of the housing.

In one embodiment of the bearing and housing assembly, the torque range maintains within a predetermined range after the bearing is press fit into the bore of the housing.

In one embodiment of the bearing and housing assembly, the outer sleeve defines at least one locking mechanism for preventing rotation of the outer sleeve relative to at least one of the inner sleeve and the housing.

In one embodiment of the bearing and housing assembly, the at least one locking mechanism comprises at least one staking groove formed in at least one axial end of the outer sleeve, the at least one staking groove defining at least one axially extending leg.

In one embodiment of the bearing and housing assembly, at least one of the inner sleeve and the housing defines at least one chamfer for receiving one of the at least one axially extending legs.

In one embodiment of the bearing and housing assembly, the outer sleeve is manufactured from a first metallic material and the inner sleeve is manufactured from a second metallic material different than the first metallic material. The first metallic material and the second metallic material are selected to inhibit galvanic corrosion.

In one embodiment of the bearing and housing assembly, the inner outer sleeve and the inner sleeve are at least one of metallic materials, non-metallic materials, composite materials, coated materials, coated materials, plastics, materials having treated surfaces and materials having untreated surfaces.

In one embodiment of the bearing and housing assembly, the operating torque is maintained within a predetermined range after the press fitting of the outer sleeve in the bore.

In one embodiment of the bearing and housing assembly, the first exterior surface of the outer sleeve has a first diameter that is selectively determined for achieving the press fit.

In one embodiment of the bearing and housing assembly, the bearing is a spherical bearing, a roller bearing or a journal bearing.

In one embodiment of the bearing and housing assembly, the inner member is an inner race, a ball, a shaft, a pin or another sliding or rolling member.

There is also disclosed herein a method for assembling a bearing within a housing according to claim 10. The method includes providing the housing that has a bore extending therethrough. The bore is defined by a fourth inner surface of the housing. The method further includes providing the bearing. The bearing includes the outer ring that has the outer sleeve, which defines the first exterior surface and the first interior area. The first interior area is defined by the first inner surface that extends through the outer sleeve. The first inner surface has the first fastener mechanism formed therein. The outer ring further includes the inner sleeve that defines the second exterior surface and the second interior area. The second interior area is defined by the second inner surface extending along the inner sleeve. The second exterior surface has the second fastener mechanism formed therein. The outer sleeve surrounds the inner sleeve. The outer sleeve extends axially from a first end to a second end of the outer sleeve. The inner sleeve extends axially from the first end to the second end of the outer sleeve. The bearing further includes an inner member that has a third exterior surface. The inner member is moveably disposed in the second interior area for relative motion between the inner member and the outer ring. The relative motion is caused by an operating torque applied to the inner member and/or the outer ring.

The method further includes press fitting the outer sleeve in the bore of the housing and removably disposing the inner sleeve in the first interior area. The inner sleeve is removably disposed in the first interior area by selectively engaging the second fastener mechanism with the first fastener mechanism so that the outer sleeve surrounds the inner sleeve and the outer sleeve extends axially from a first end to a second end thereof and the inner sleeve extends axially from the first end to the second end of the outer sleeve and such that the operating torque is maintained within a predetermined range throughout and after the selective engagement of the first fastener mechanism with the second fastener mechanism.

### BRIEF DESCRIPTION OF THE DRAWINGS

FIG. 1 is a longitudinal cross sectional view of a lined spherical bearing assembly of the present invention having a V-groove, shown before staking;
FIG. 2 is a longitudinal cross sectional view of the lined spherical bearing assembly of FIG. 1 shown after staking;
FIG. 3 is a longitudinal cross sectional view of the lined spherical bearing assembly of the present invention having a W-groove, shown before staking;
FIG. 4 is a longitudinal cross sectional view of the lined spherical bearing assembly of FIG. 3 shown after staking;
FIG. 5 is a longitudinal cross sectional view of a lined spherical bearing assembly with an outer ring having an outer sleeve positioned around a circumferentially split two-piece inner sleeve and having a V-groove in the outer sleeve, shown before staking;
FIG. 6 is a longitudinal cross sectional view of a journal bearing assembly with an outer ring having an outer sleeve positioned around an inner sleeve and having a V-groove in the outer sleeve, shown before staking;
FIG. 7 is a traverse cross sectional view of a roller bearing assembly with an outer ring having an outer sleeve positioned around an inner sleeve and having a V-groove in the outer sleeve, shown before staking;
FIG. 8 is a traverse cross sectional view of a two piece sleeve press fit in a bore of a housing and around a shaft;
FIG. 9 is a longitudinal cross sectional view of a spherical bearing assembly with no lubricant and having a V-groove, shown before staking;
FIG. 10 is a perspective view of the spherical bearing assembly of the present invention, wherein the inner sleeve is split longitudinally;
FIG. 11 is a perspective view of the spherical bearing assembly of the present invention, wherein a chamfer extends partially around the inner sleeve;
FIG. 12 is a front cross section of the spherical bearing assembly of the present invention, wherein an axially extending leg extends partially around the outer sleeve; and
FIG. 13 is a longitudinal cross section of an alternative embodiment of the spherical bearing assembly of the present invention, wherein a female threaded surface is formed in the housing.

### DETAILED DESCRIPTION

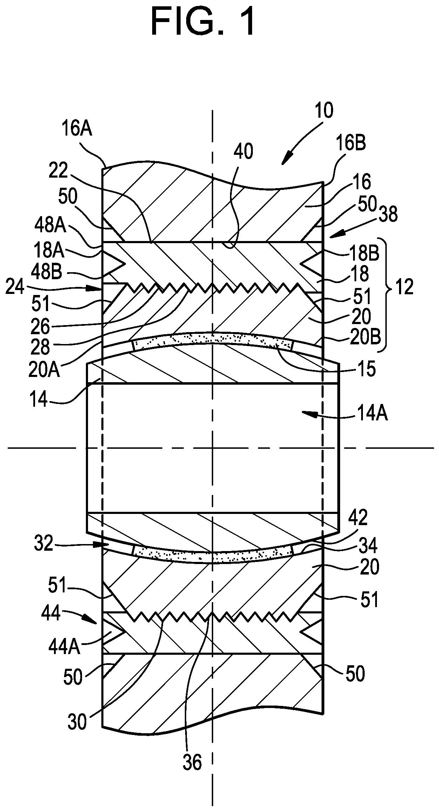

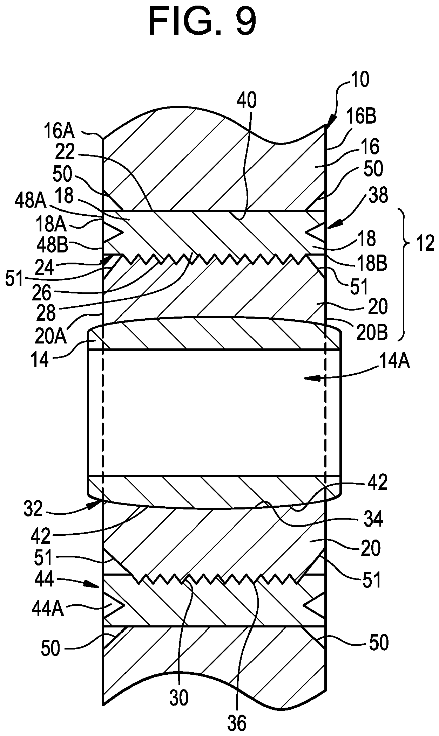

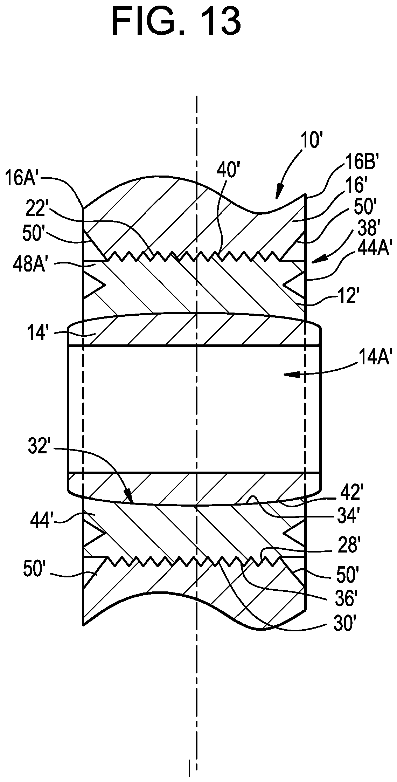

As shown in FIGS. 1-4, a bearing assembly is generally designated by the numeral 10. The bearing assembly illustrated in FIGS. 1-4 is a lubricated spherical bearing 10 and includes an inner member 14 (e.g., an inner race, a ball, a shaft, a pin or another sliding or rolling member) partially disposed in an outer ring 12, for example, a two piece outer ring (e.g., segmented), as described herein. The outer ring 12 and the inner member 14 are positioned in a housing 16. The outer ring 12 includes an outer sleeve 18 removably positioned around (e.g., surrounds) an inner sleeve 20. The inner member 14 defines a bore 14A extending therethrough. In the embodiment shown in FIGS. 1-4 a lubricant 15 (e.g., a Polytetrafluoroethylene (PTFE) self-lubricating liner, or grease) is positioned between the inner member 14 and the outer ring 12. However, the present invention is not limited in this regard, as other embodiments may not employ a lubricant, for example as shown and described herein with reference to FIGS. 9 and 13.

The outer sleeve 18 defines a first exterior surface 22 and a first interior area 24. The first interior area 24 is defined by a first inner surface 26 that extends along the outer sleeve 18 from first axial end 18A to a second axial end 18B of the outer sleeve 18. The first exterior surface 22 extends from the first axial end 18A to the second axial end 18B. A first fastener mechanism 28 (e.g., a female thread) is formed in the first inner surface 26. The inner sleeve 20 defines a second exterior surface 30 that extends from a third axial end 20A to a fourth axial end 20B of the inner sleeve 20. A second interior area 32 defines a second inner surface 34 (e.g., a concave spherical surface) that extends along (e.g., extends through) the inner sleeve 20 from the third axial end 20A to the fourth axial end 20B. The inner sleeve 20 extends from the first end 18A to the second end 18B of the outer sleeve 18 so that the first end 18A and the third end 20A are coplanar and the second end 18B and the fourth end 20B are coplanar.

A second fastener mechanism 36 (e.g., a male thread) is formed in the second exterior surface 30. The inner sleeve 20 is removably disposed in the first interior area 24 via selective engagement of the first fastener mechanism 28 (e.g., a female thread) with the second fastener mechanism 36 (e.g., a male thread). As shown in FIGS. 1-4, the first fastener mechanism 28 is a female threaded area and the second fastener mechanism 36 is a male threaded area. The male threaded area 36 is selectively engaged with the female threaded area 28. The female threaded area of the first fastener mechanism 28 and the male threaded area of the second fastener mechanism 36 have a predetermined clearance (e.g., thread tolerance) to allow the outer sleeve 18 to be press fit in the bore 38 without excessive radially inward distortion that would affect or change the operating torque of the bearing assembly 10.

In one embodiment, the operating torque of the bearing assembly 10 is equal to the operating torque after press fitting of the bearing 10 into the bore 38 of the housing 16. In one embodiment, the operating torque of the bearing assembly 10 is within 1% of the operating torque after press fitting of the bearing 10 into the bore 38 of the housing 16. In one embodiment, the operating torque of the bearing assembly 10 is within 5% of the operating torque after press fitting of the bearing 10 into the bore 38 of the housing 16. The thread clearance/thread design is per MIL-S-8879, or any other standard thread design.

Referring to FIGS. 1-4, the second inner surface 34 defines a bearing surface for rotatable communication with a third exterior surface 42 (e.g., a spherical surface) of the inner member 14. The inner member 14 is positioned (e.g., swaged) in the first interior area 24 of the outer ring 12 for relative rotation between the inner member 14 and the first interior area 24 of the outer ring 12. The relative rotation is caused by an operating torque applied to the inner member and/or the outer ring 12 that remains within a predetermined range throughout and after the selective engagement of the first fastener mechanism 28 with the second fastener mechanism 36 and after press fitting the outer sleeve 18 into the bore 38 of the housing 16. The predetermined range of torque is + 5 percent of a normal operating torque. In one embodiment, the predetermined range of torque is 1-5 percent of a normal operating torque. The percentage of the normal operating torque fluctuates based upon the size of the bearing.

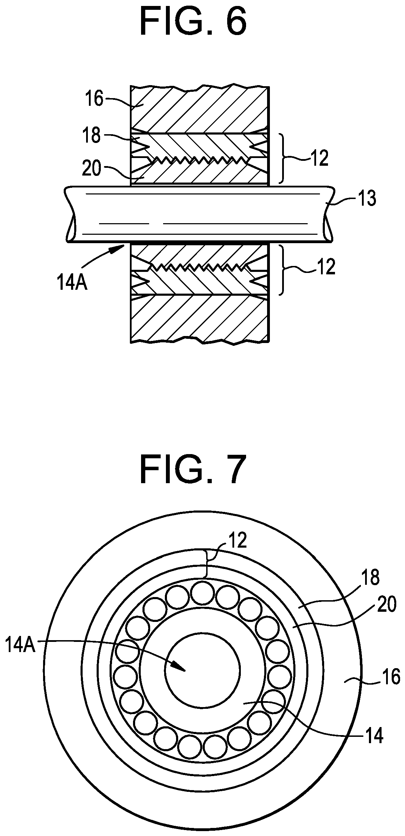

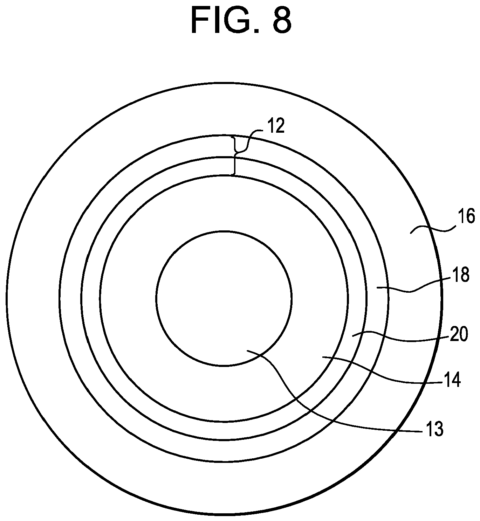

Although the outer ring 12 having the outer sleeve 18 removably positioned around the inner sleeve 20 is shown and described herein with regard to the lined spherical bearing assembly 10 shown in FIGS. 1-4, the present invention is not limited in this regard, as any suitable type of bearing may be employed, including but not limited to journal bearings rotatably supporting a shaft 13 (see FIG. 6), roller bearings (see FIG. 7), spherical bearings without a lubricant (see FIG. 9), without departing from the broader aspects of the present invention. In addition, while the outer ring 12 having the outer sleeve 18 removably positioned around the inner sleeve 20 is shown and described herein with regard to the lined spherical bearing assembly 10 shown in FIGS. 1-4, the present invention is not limited in this regard, as the outer ring 12 may be adapted for use as a two piece sleeve having the outer sleeve 18 removably positioned around the inner sleeve 20 and may be employed as a two piece spacer or a sleeve, for example positioned or press fit around a shaft 13 and/or press fit in a bore of a housing 16 (see FIG. 8).

Referring to FIGS. 1-4, the first fastener mechanism 28 is a female threaded area and the second fastener mechanism 36 is a male threaded area that selectively engages the female threaded area 28. The housing 16 defines a bore 38 that extends therethrough. The bore 38 defines a fourth interior surface 40. The first exterior surface 22 is cylindrical and press fitted into the bore 38 (e.g., a cylindrical bore) of the housing 16 such that the first exterior surface 22 of the inner sleeve 20 is in contact with the fourth interior surface 40. The diameter of first exterior surface 22 of the outer sleeve 20 is selectively determined based upon size of the bore 38 for achieving the press fit. Although the first exterior surface 22 is shown and described as cylindrical, the present invention is not limited in this regard, as any suitable shape of the first exterior surface 22 may be employed.

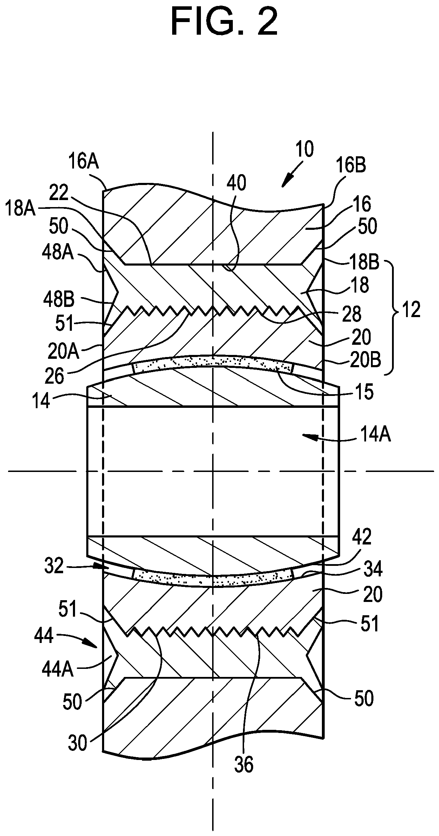

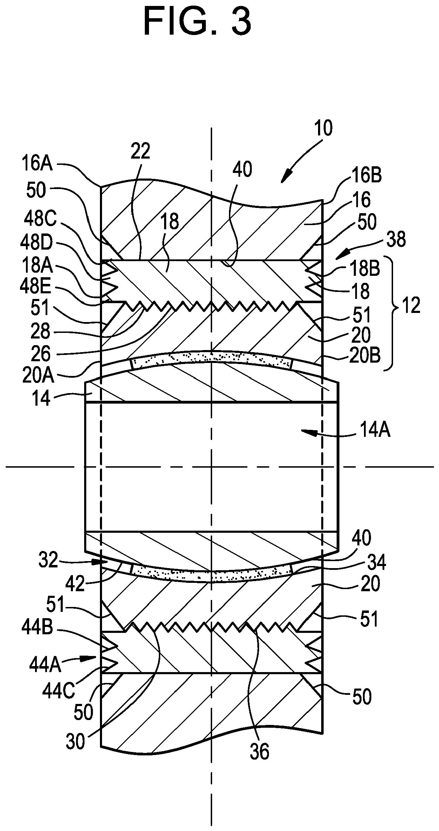

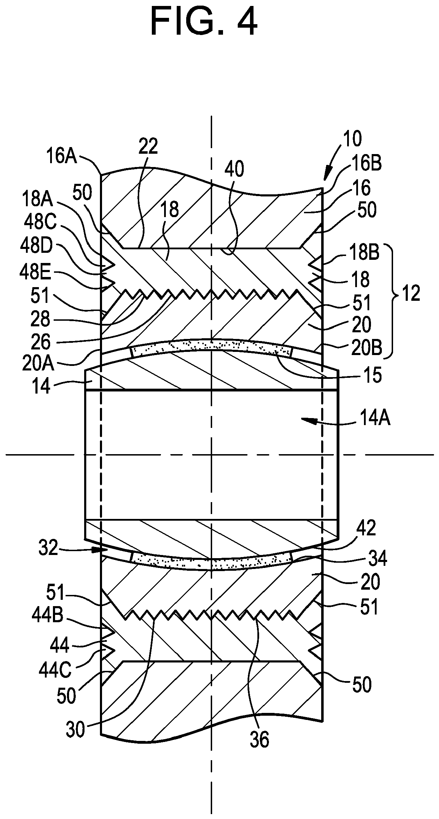

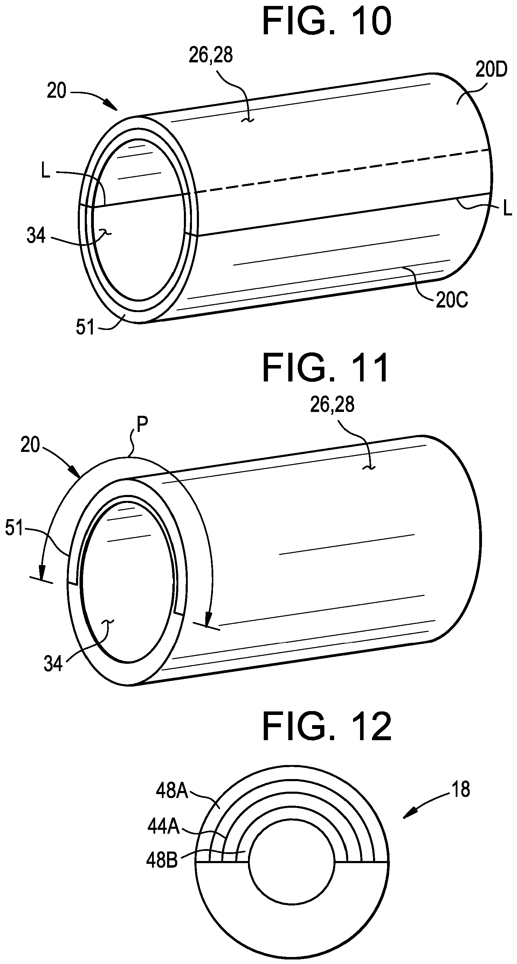

In one embodiment, as shown in FIGS. 1-4, the outer sleeve 18 includes a locking mechanism 44 that prevents rotation and axial movement of the outer sleeve 18 relative to the inner sleeve 20 when the inner sleeve 20 is disposed in the first interior area 24. The locking mechanism 44 also secures the outer ring 12 relative to the housing 16. In one embodiment, as shown in FIGS. 1 and 2, the locking mechanism 44 includes one staking groove 44A formed in each of the axial ends 18A and 18B of the outer sleeve 18. In one embodiment, as shown in FIGS. 1 and 2, the staking groove 44A is defined by two axially extending legs 48A and 48B. In one embodiment, as shown in FIGS. 1-4, the inner sleeve 20 defines a chamfer 51 extending circumferentially around each of the two opposing axial ends of the inner sleeve 20. The chamfers 51 extend radially outward and axially inward from each of the axial ends 20A and 20B of the inner sleeve 20. The chamfers 51 are configured to receive the axially extending leg 48A. A chamfer 50 extends circumferentially around each of the two opposing axial ends 16A and 16B of the housing 16. The chamfers 50 extend radially and axially inward from each of the ends 16A and 16B of the housing 16. The chamfers 50 are configured to receive the axially extending leg 48A. In an alternative embodiment, as shown in FIGS. 3 and 4, the chamfers 50 are configured to receive the axially extending legs 48C. Although the chamfers 51 extend completely around the inner sleeve 20 in the described embodiment, the present invention is not limited in this regard as the chamfers 51 may extend partially around the inner sleeve 20, as indicated by the arrow P and as shown in FIG. 11. Similar to that shown in FIG. 11 for the chamfers 51, the chamfers 50 may extend partially around the housing 16.

As shown in FIG.2, the leg 48A is plastically deformed (e.g., staked) into the chamfer 50. In an alternative embodiment, as shown in FIGS. 3 and 4, the locking mechanism 44 includes two staking grooves 44B and 44C. In this embodiment, the locking mechanism 44 further includes three axially extending legs 48C, 48D and 48E. As shown in FIG. 4, the leg 48C is plastically deformed (e.g., staked) into the chamfer 50. Although configurations (1) containing one staking groove 44A and two axially extending legs 48A and 48B; and (2) containing two staking grooves 44B and 44C and three axially extending legs 48C, 48D and 48E are shown and described, the present invention is not limited in this regard, as one skilled in the relevant art could reasonably deduce from the disclosures herein that any suitable number of axially extending legs 48A, 48B, 48C, 48D and 48E and any suitable number of staking grooves 44A, 44B and 44C can be employed to the same effect. Although the axially extending legs 48A, 48B, 48C, 48D and 48E are described as extending completely around the outer sleeve 18, the present invention is not limited in this regard, as the axially extending legs 48A, 48B, 48C, 48D and 48E may extend partially around the outer sleeve 18, as shown in FIG. 12.

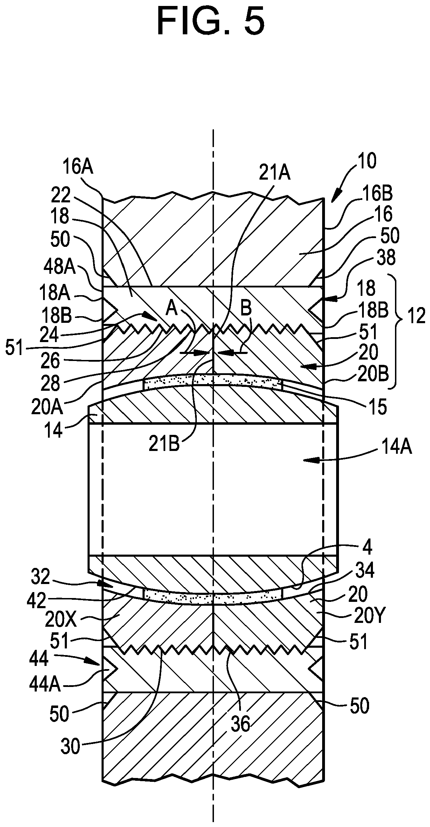

In one embodiment, as shown in FIG. 5, the inner sleeve 20 is split (e.g., segmented) circumferentially. The split divides the inner sleeve 20 into a first section 20X and a second section 20Y. The first section 20X is screwed into the outer sleeve 18 in a direction indicated by the arrow A. The second section 20Y is screwed into the outer sleeve 18 in a direction indicated by the arrow B. In this embodiment, when the first section 20X is in suitable communication with the second section 20B, a first axial surface 21A defined by an axial end of the first section 20X is flush with a second axial surface 21B defined by an axial end of the second section 20Y. Although in this embodiment, the inner sleeve 20 is split circumferentially into two sections, the present invention is not limited in this regard, as the inner sleeve 20 may be split (e.g., segmented) into any number of sections and in any suitable manner, such as longitudinally split along plane L, as shown in FIG. 10.

In the embodiment is shown in FIG. 13, corresponding elements are labeled as such, but are denoted as prime. In this embodiment, a housing 16' has a bore 38' extending therethrough. The bore 38' is defined by a fourth inner surface 22' of the housing 16'. The fourth inner surface 22' of the housing 16' has a first fastener mechanism 28' (e.g., a female threaded area) formed therein. A bearing is disposed in the bore 38'. The bearing includes an inner member 14' disposed in an outer ring 12'. The outer ring 12' defines a second exterior surface 30'. A second interior area 32' defines a second inner surface 34' (e.g., a spherical surface) that extends along the outer ring 12'. A second fastener mechanism 36' (e.g., a male thread) is formed in the second exterior surface 30'. The outer ring 12' is removably disposed in the bore 38' defined by the fourth inner surface 22' via selective engagement of the first fastener mechanism 28' (e.g., a female thread) with the second fastener mechanism 36' (e.g., a male thread). In one embodiment, as shown in FIG. 13, the first fastener mechanism 28' is a female threaded area and the second fastener mechanism 36' is a male threaded area. The male threaded area 36' is selectively engaged in the female threaded area 28'.

In one embodiment, the outer sleeve 18 is manufactured form a first metallic material and the inner sleeve 20 is manufactured a second metallic material, the second metallic material being different than the first metallic material. In one embodiment, the outer sleeve 18 and the inner sleeve 20 are manufactured from one or more of metallic materials, non-metallic materials, composite materials, coated materials, plastics, materials having treated surfaces, materials having untreated surfaces or any metallic or nonmetallic materials, with or without one or more treatments. The materials are selected to inhibit galvanic corrosion. In one embodiment, the inner sleeve 20 and/or the outer sleeve 18 has a surface treatment thereon.

A method for assembling a bearing 10 in a housing 16 includes providing the housing 16. The housing 16 has a bore 38 that extends therethrough. The bore 38 is defined by the fourth interior surface 40. The method further includes providing the bearing 10. The bearing 10 includes the outer ring 12, which includes the outer sleeve 18 and the inner sleeve 20. The outer sleeve 18 defines the first exterior surface 22 and the first interior area 24. The first interior area 24 is defined by the first inner surface 26. The first inner surface 26 has the first fastener mechanism 28 formed therein (e.g., a female thread). The inner sleeve 20 defines the second exterior surface 30 and the second interior area 32. The second interior area 32 is defined by the second inner surface 34 that extends along the outer sleeve 18. The second exterior surface 30 has the second fastener mechanism 36 (e.g., a male thread) formed therein.

The bearing further includes the inner member 14. The inner member 14 has the third exterior surface 42 (e.g., a convex spherical surface) formed thereon. The inner member 14 is moveably disposed in the second interior area 32 for relative motion between the inner member 14 and the outer ring 12. The relative motion is caused by an operating torque applied to the inner member and/or the outer ring. The method further includes press fitting the outer sleeve 18 in the bore 38 of the housing 16 and removably disposing the inner sleeve 20 in the first interior area 24. The inner sleeve 20is removably disposed in the first interior area 24 by selectively engaging the second fastener mechanism 36 with the first fastener mechanism 28, such that the operating torque applied to the inner member and/or the outer ring is remains within a predetermined range throughout the selective engagement of the first fastener mechanism 28 with the second fastener mechanism 36 and after press fitting the outer sleeve 18 in the bore 38.

Although the present invention has been disclosed and described with reference to certain embodiments thereof, it should be noted that other variations and modifications may be made, and it is intended that the following claims cover the variations and modifications within the true scope of the invention.

## Claims

1. A bearing and housing assembly, comprising a housing (16) and an outer ring (12), the outer ring (12) comprising:
an outer sleeve (18) defining a first exterior surface (22) and a first interior area (24), the first interior area being defined by a first inner surface (26) extending along the outer sleeve, the first inner surface having a first fastener mechanism (28) formed therein;
an inner sleeve (20) defining a second exterior surface (30) and a second interior area (32), the second interior area being defined by a second inner surface (34) extending along the inner sleeve, the second exterior surface (30) having a second fastener mechanism (36) formed therein;
the inner sleeve (20) being removably disposed in the first interior area (24) by selective engagement of the first fastener mechanism (28) with the second fastener mechanism (36) and so that the outer sleeve (18) surrounds the inner sleeve (20); and
the outer sleeve (18) extending axially from a first end (18A) to a second end (18B) thereof and the inner sleeve (20) extending axially from the first end (18A) to the second end (18B) of the outer sleeve,
wherein the first fastener mechanism comprises a female threaded area and the second fastener mechanism comprises a male threaded area which is selectively threadedly engaged with the female threaded area,
wherein the outer ring (12) is installed in a bearing having an inner member (14), the inner member having a third exterior surface (42), the inner member (14) being at least partially disposed in the first interior area (24) for relative rotation therebetween, the relative rotation being caused by an operating torque,
**characterized in that**
the first exterior surface (22) is cylindrical and press fitted into a bore (38) of the housing (16), and **in that** the female threaded area and the male threaded area have a standard thread design and a clearance that maintains the operating torque within 5 percent of a normal operating range throughout and after the selective engagement of the first fastener mechanism (28) with the second fastener mechanism (36).

2. The bearing and housing assembly of claim 1, wherein the second inner surface (34) defines a bearing surface for rotatable communication with a third exterior surface (42) of an inner member (14).

3. The bearing and housing assembly-of claim 1, wherein the outer sleeve (18) defines at least one locking mechanism (44) for preventing rotation of the outer sleeve relative to the inner sleeve (20) when the inner sleeve is disposed in the in the first interior area (24).

4. The bearing and housing assembly-of claim 3, wherein the at least one locking mechanism (44) comprises at least one staking groove (44A) formed in at least one axial end of the outer sleeve (18), the at least one staking groove defining at least one axially extending leg (48A, 48B).

5. The bearing and housing assembly of claim 4, wherein the inner sleeve (20) defines at least one chamfer (51) for receiving one of the at least one axially extending legs (48A, 48B).

6. The bearing and housing assembly of claim 1, wherein the outer sleeve (18) is manufactured from a first metallic material and the inner sleeve (20) is manufactured from a second metallic material different than the first metallic material, the first metallic material and the second metallic material being selected to inhibit galvanic corrosion.

7. The bearing and housing assembly of claim 1, wherein the bearing is one of a spherical bearing, a journal bearing and a roller bearing.

8. The bearing and housing assembly of claim 2, wherein the inner member (14) is one of an inner race, a ball, a shaft, a pin and another sliding or rolling member.

9. The bearing and housing assembly of claim 1 wherein the bearing is installed in a housing (16) having a bore (38) extending therethrough, the bore being defined by fourth inner surface (40) of the housing and the bearing being disposed at least partially in the bore.

10. A method for assembling a bearing in a housing (16), the method comprising:
providing a housing (16) having a bore (38) extending therethrough, the bore being defined by fourth inner (40) surface of the housing;
providing a bearing comprising:
an outer ring (12) comprising;
an outer sleeve (18) defining a first exterior surface (22) and a first interior area (24), the first exterior surface being cylindrical and the first interior area being defined by a first inner surface (26) extending along the outer sleeve, the first inner surface having a first fastener mechanism (28) formed therein, the first fastener mechanism comprising a female threaded area;
an inner sleeve (20) defining a second exterior surface (30) and a second interior area (32), the second interior area being defined by a second inner surface (34) extending along the inner sleeve, the second exterior surface (30) having a second fastener mechanism (36) formed therein, wherein the second fastener mechanism comprises a male threaded area which is selectively threadedly engaged with the female threaded area; wherein the female threaded area and the male threaded area have a standard thread design and a clearance;
an inner member (14) having a third exterior surface (42), the inner member being moveably disposed in the second interior area (32) for relative motion between the inner member (14) and the outer ring (12), the relative motion being caused by an operating torque;
press fitting the outer sleeve (18) in the bore (38) of the housing (16); and
removably disposing the inner sleeve in the first interior area (24) by selectively engaging the second fastener mechanism (36) with the first fastener mechanism (28) so that the outer sleeve (18) surrounds the inner sleeve (20) and the outer sleeve extends axially from a first end to a second end thereof and the inner sleeve (20) extends axially from the first end (18A) to the second end (18B) of the outer sleeve (18) such that the clearance maintains the operating torque within 5 percent of a normal operating range throughout and after the selective engagement of the first fastener mechanism (28) with the second fastener mechanism (36).

## Patentansprüche

1. Lager- und Gehäusebaugruppe, die ein Gehäuse (16) und einen Außenring (12) umfasst, wobei der Außenring (12) umfasst:
eine äußere Hülse (18), die eine erste außenliegende Fläche (22) und einen ersten innenliegenden Bereich (24) definiert, wobei der erste innenliegende Bereich durch eine erste Innenfläche (26) definiert wird, die sich entlang der äußeren Hülse erstreckt, wobei in der ersten Innenfläche ein erster Befestigungsmechanismus (28) ausgebildet ist;
eine innere Hülse (20), die eine zweite außenliegende Fläche (30) und einen zweiten innenliegenden Bereich (32) definiert, wobei der zweite innenliegende Bereich durch eine zweite Innenfläche (34) definiert wird, die sich entlang der inneren Hülse erstreckt, wobei in der zweiten außenliegenden Fläche (30) ein zweiter Befestigungsmechanismus (36) ausgebildet ist;
wobei die innere Hülse (20) durch selektives Ineingriffbringen des ersten Befestigungsmechanismus (28) mit dem zweiten Befestigungsmechanismus (36) und so, dass die äußere Hülse (18) die innere Hülse (20) umgibt, entfernbar in dem ersten innenliegenden Bereich (24) angeordnet ist; und
die äußere Hülse (18) sich axial von einem ersten Ende (18A) zu einem zweiten Ende (18B) derselben erstreckt und die innere Hülse (20) sich axial von dem ersten Ende (18A) zu dem zweiten Ende (18B) der äußeren Hülse erstreckt,
wobei der erste Befestigungsmechanismus einen Innengewindebereich umfasst und der zweite Befestigungsmechanismus einen Außengewindebereich umfasst, der selektiv in Schraubeingriff mit dem Innengewindebereich gebracht wird,
wobei der Außenring (12) in einem Lager installiert ist, das ein inneres Element (14) aufweist, wobei das innere Element eine dritte außenliegende Fläche (42) aufweist, wobei das innere Element (14) - für eine relative Drehung zwischen beiden - wenigstens teilweise in dem ersten innenliegenden Bereich (24) angeordnet ist, wobei die relative Drehung durch ein Betriebsdrehmoment bewirkt wird,
**dadurch gekennzeichnet, dass**
die erste außenliegende Fläche (22) zylindrisch und in eine Bohrung (38) des Gehäuses (16) presseingepasst ist und dass der Innengewindebereich und der Außengewindebereich eine Normgewindegestaltung und ein Spiel, welches das Betriebsdrehmoment während und nach des/m selektiven Ineingriffbringen(s) des ersten Befestigungsmechanismus (28) mit dem zweiten Befestigungsmechanismus (36) innerhalb von 5 Prozent eines normalen Betriebsbereichs hält, aufweisen.

2. Lager- und Gehäusebaugruppe nach Anspruch 1, wobei die zweite Innenfläche (34) eine Lagerfläche für ein drehbares Inverbindungstehen mit einer dritten außenliegenden Fläche (42) eines inneren Elements (14) definiert.

3. Lager- und Gehäusebaugruppe nach Anspruch 1, wobei die äußere Hülse (18) wenigstens einen Arretiermechanismus (44) definiert, um eine Drehung der äußeren Hülse bezogen auf die innere Hülse (20) zu verhindern, wenn die innere Hülse in dem ersten innenliegenden Bereich (24) angeordnet ist.

4. Lager- und Gehäusebaugruppe nach Anspruch 3, wobei der wenigstens eine Arretiermechanismus (44) wenigstens eine Aufspreiznut (44A) umfasst, die in wenigstens einem axialen Ende der äußeren Hülse (18) ausgebildet ist, wobei die wenigstens eine Aufspreiznut wenigstens einen sich axial erstreckenden Schenkel (48A, 48B) definiert.

5. Lager- und Gehäusebaugruppe nach Anspruch 4, wobei die innere Hülse (20) wenigstens eine Abschrägung (51) zum Aufnehmen eines der wenigstens einen sich axial erstreckenden Schenkel (48A, 48B) definiert.

6. Lager- und Gehäusebaugruppe nach Anspruch 1, wobei die äußere Hülse (18) aus einem ersten metallischen Material hergestellt ist und die innere Hülse (20) aus einem zweiten metallischen Material hergestellt ist, das anders als das erste metallische Material ist, wobei das erste metallische Material und das zweite metallische Material dazu ausgewählt sind, galvanische Korrosion zu verhindern.

7. Lager- und Gehäusebaugruppe nach Anspruch 1, wobei das Lager eines aus einem sphärischen Lager, einem Drehlager und einem Rollenlager ist.

8. Lager- und Gehäusebaugruppe nach Anspruch 2, wobei das innere Element (14) eines aus einer Innenlaufbahn, einer Kugel, einer Welle, einem Stift und einem anderen gleitenden oder rollenden Element ist.

9. Lager- und Gehäusebaugruppe nach Anspruch 1, wobei das Lager in einem Gehäuse (16) installiert ist, durch das sich eine Bohrung (38) erstreckt, wobei die Bohrung durch eine vierte Innenfläche (40) des Gehäuses definiert wird und das Lager wenigstens teilweise in der Bohrung angeordnet ist.

10. Verfahren zum Einbauen eines Lagers in ein Gehäuse (16), wobei das Verfahren umfasst:
Bereitstellen eines Gehäuses (16), durch das sich eine Bohrung (38) erstreckt, wobei die Bohrung durch eine vierte Innenfläche (40) des Gehäuses definiert wird;
Bereitstellen eines Lagers, umfassend:
einen Außenring (12), umfassend:
eine äußere Hülse (18), die eine erste außenliegende Fläche (22) und einen ersten innenliegenden Bereich (24) definiert, wobei die erste außenliegende Fläche zylindrisch ist und der erste innenliegende Bereich durch eine erste Innenfläche (26) definiert wird, die sich entlang der äußeren Hülse erstreckt, wobei in der ersten Innenfläche ein erster Befestigungsmechanismus (28) ausgebildet ist, wobei der erste Befestigungsmechanismus einen Innengewindebereich umfasst;
eine innere Hülse (20), die eine zweite außenliegende Fläche (30) und einen zweiten innenliegenden Bereich (32) definiert, wobei der zweite innenliegende Bereich durch eine zweite Innenfläche (34) definiert wird, die sich entlang der inneren Hülse erstreckt, wobei in der zweiten außenliegenden Fläche (30) ein zweiter Befestigungsmechanismus (36) ausgebildet ist, wobei der zweite Befestigungsmechanismus einen Außengewindebereich umfasst, der selektiv in Schraubeingriff mit dem Innengewindebereich gebracht wird; wobei der Innengewindebereich und der Außengewindebereich eine Normgewindegestaltung und ein Spiel aufweisen;
ein inneres Element (14), das eine dritte außenliegende Fläche (42) aufweist, wobei das innere Element - für eine relative Bewegung zwischen dem inneren Element (14) und dem Außenring (12) - bewegbar in dem zweiten innenliegenden Bereich (32) angeordnet ist, wobei die relative Bewegung durch ein Betriebsdrehmoment bewirkt wird;
Presseinpassen der äußeren Hülse (18) in die Bohrung (38) des Gehäuses (16); und
entfernbares Anordnen der inneren Hülse in dem ersten innenliegenden Bereich (24) durch selektives Ineingriffbringen des zweiten Befestigungsmechanismus (36) mit dem ersten Befestigungsmechanismus (28), so dass die äußere Hülse (18) die innere Hülse (20) umgibt und die äußere Hülse sich axial von einem ersten Ende zu einem zweiten Ende derselben erstreckt und die innere Hülse (20) sich axial von dem ersten Ende (18A) zu dem zweiten Ende (18B) der äußeren Hülse (18) erstreckt, derart dass das Spiel das Betriebsdrehmoment während und nach des/m selektiven Ineingriffbringen(s) des ersten Befestigungsmechanismus (28) mit dem zweiten Befestigungsmechanismus (36) innerhalb von 5 Prozent eines normalen Betriebsbereichs hält.

## Revendications

1. Ensemble de palier et logement, comprenant un logement (16) et un anneau extérieur (12), l'anneau extérieur (12) comprenant :
un manchon extérieur (18) définissant une première surface extérieure (22) et une première zone intérieure (24), la première zone intérieure étant définie par une première surface intérieure (26) s'étendant le long du manchon extérieur, la première surface intérieure présentant un premier mécanisme de fixation (28) formé dans celle-ci ;
un manchon intérieur (20) définissant une deuxième surface extérieure (30) et une seconde zone intérieure (32), la seconde zone intérieure étant définie par une seconde surface intérieure (34) s'étendant le long du manchon intérieur, la deuxième surface extérieure (30) ayant un second mécanisme de fixation (36) formé dans celle-ci ;
le manchon intérieur (20) étant disposé de manière amovible dans la première zone intérieure (24) par une mise en prise sélective du premier mécanisme de fixation (28) avec le second mécanisme de fixation (36) et de sorte que le manchon extérieur (18) entoure le manchon intérieur (20) ; et
le manchon extérieur (18) s'étendant axialement d'une première extrémité (18A) à une seconde extrémité (18B) et le manchon intérieur (20) s'étendant axialement de la première extrémité (18A) à la seconde extrémité (18B) du manchon extérieur,
dans lequel le premier mécanisme de fixation comprend une zone filetée femelle et le second mécanisme de fixation comprend une zone filetée mâle qui est mise en prise sélectivement par vissage avec la zone filetée femelle,
dans lequel l'anneau extérieur (12) est installé dans un palier comportant un élément intérieur (14), l'élément intérieur comportant une troisième surface extérieure (42), l'élément intérieur (14) étant au moins partiellement disposé dans la première zone intérieure (24) pour une rotation relative entre ceux-ci, la rotation relative étant provoquée par un couple d'actionnement,
**caractérisé en ce que**
la première surface extérieure (22) est cylindrique et ajustée à la presse dans un alésage (38) du logement (16), et **en ce que** la zone filetée femelle et la zone filetée mâle ont une conception de filetage standard et un jeu qui maintient le couple d'actionnement dans les 5 % d'une plage de fonctionnement normale d'un bout à l'autre de et après la mise en prise sélective du premier mécanisme de fixation (28) avec le second mécanisme de fixation (36).

2. Ensemble de palier et logement selon la revendication 1, dans lequel la seconde surface intérieure (34) définit une surface de palier pour une communication rotative avec une troisième surface extérieure (42) d'un élément intérieur (14).

3. Ensemble de palier et logement selon la revendication 1, dans lequel le manchon extérieur (18) définit au moins un mécanisme de verrouillage (44) pour empêcher une rotation du manchon extérieur par rapport au manchon intérieur (20) lorsque le manchon intérieur est disposé dans la première zone intérieure (24).

4. Ensemble de palier et logement selon la revendication 3, dans lequel le au moins un mécanisme de verrouillage (44) comprend au moins une rainure de calage (44A) formée dans au moins une extrémité axiale du manchon extérieur (18), la au moins une rainure de calage définissant au moins une jambe (48A, 48B) s'étendant axialement.

5. Ensemble de palier et logement selon la revendication 4, dans lequel le manchon intérieur (20) définit au moins un chanfrein (51) destiné à recevoir l'une des au moins une jambe (48A, 48B) s'étendant axialement.

6. Ensemble de palier et logement selon la revendication 1, dans lequel le manchon extérieur (18) est fabriqué à partir d'un premier matériau métallique et le manchon intérieur (20) est fabriqué à partir d'un second matériau métallique différent du premier matériau métallique, le premier matériau métallique et le second matériau métallique étant sélectionnés pour inhiber une corrosion galvanique.

7. Ensemble de palier et logement selon la revendication 1, dans lequel le palier est un parmi un palier sphérique, un palier lisse et un palier à roulement.

8. Ensemble de palier et logement selon la revendication 2, dans lequel l'élément interne (14) est l'un d'une bague intérieure, d'une bille, d'un arbre, d'une broche et d'un autre élément coulissant ou roulant.

9. Ensemble de palier et logement selon la revendication 1, dans lequel le palier est installé dans un logement (16) ayant un alésage (38) s'étendant à travers celui-ci, l'alésage étant défini par une quatrième surface intérieure (40) du logement et le palier étant disposé à moins partiellement dans l'alésage.

10. Procédé pour assembler un roulement dans un logement (16), le procédé comprenant les étapes consistant à :
fournir un logement (16) ayant un alésage (38) s'étendant à travers celui-ci, l'alésage étant défini par une quatrième surface intérieure (40) du logement ;
fournir un roulement comprenant :
un anneau extérieur (12) comprenant ;
un manchon extérieur (18) définissant une première surface extérieure (22) et une première zone intérieure (24), la première surface extérieure étant cylindrique et la première zone intérieure étant définie par une première surface intérieure (26) s'étendant le long du manchon extérieur, la première surface intérieure comportant un premier mécanisme de fixation (28), le premier mécanisme de fixation comprenant une zone filetée femelle ;
un manchon intérieur (20) définissant une deuxième surface extérieure (30) et une seconde zone intérieure (32), la seconde zone intérieure étant définie par une seconde surface intérieure (34) s'étendant le long du manchon intérieur, la deuxième surface extérieure (30) ayant un second mécanisme de fixation (36) formé dans celle-ci, dans lequel le second mécanisme de fixation comprend une zone filetée mâle qui est mise en prise sélectivement avec la zone filetée femelle ; dans lequel la zone filetée femelle et la zone filetée mâle ont une conception de filetage standard et un jeu ;
un élément intérieur (14) ayant une troisième surface extérieure (42), l'élément intérieur étant disposé de manière mobile dans la seconde zone interne (32) pour un mouvement relatif entre l'élément intérieur (14) et l'anneau extérieur (12), le mouvement relatif étant provoqué par un coule d'actionnement ;
ajuster à la presse le manchon extérieur (18) dans l'alésage (38) du logement (16) ; et
disposer de manière amovible le manchon intérieur dans la première zone intérieure (24) en mettant en prise sélectivement le second mécanisme de fixation (36) avec le premier mécanisme de fixation (28) de sorte que le manchon extérieur (18) entoure le manchon intérieur (20) et le manchon extérieur s'étend axialement d'une première extrémité à une seconde extrémité de celui-ci et le manchon intérieur (20) s'étend axialement de la première extrémité (18A) à la seconde extrémité (18B) du manchon extérieur (18) de sorte que le jeu maintient le couple d'actionnement dans les 5 % d'une plage de fonctionnement normale d'un bout à l'autre de et après la mise en prise sélective du premier mécanisme de fixation (28) avec le second mécanisme de fixation (36).
